# EUROPEAN PATENT APPLICATION

(11) **EP 4 175 141 A1**
(43) Date of publication of application: **03.05.2023**
(21) Application number: 22185338.5
(22) Date of filing: 15.07.2022
(51) Int. Cl.: H02K 53/00, H02K 1/2796, H02K 21/24, H02K 47/20

(54) **ENERGY-SAVING BRUSHLESS MOTOR-KINETIC GENERATOR WITH ENERGY-SAVING FUNCTION**

(30) Priority: 26.10.2021 CN 202111250925
(71) Applicant: Lifetrons Switzerland Holdings Limited, Tuen Mun (HK)
(72) Inventor: Tseng, Chih-Ming, Tuen Mun (HK); Tsai, Jui-Ming, Tuen Mun (HK)
(74) Representative: Lang, Christian

(57) **Abstract**

An energy-saving brushless motor-kinetic generator is provided in the present invention, especially a combination structure by adjusting the rotors and the stators in the electric generator. The energy-saving brushless motor-kinetic generator with the new combination structure can be simply cascaded to assemble an energy-saving system with the energy-saving brushless motor-kinetic generator included with magnetic energy motor electric power. The energy-saving brushless motor-kinetic generator can specifically perform transformation of magnetic energy and mechanical energy by magnetic energy of permanent magnet of the rotors and design of turns of the stator windings, so to enhance output of electrical energy.

## Description

### FIELD OF THE INVENTION

The present invention relates to an electric generator, more particularly to perform translation between magnetic energy and mechanical energy to increase output of electric energy due to pole number of each of permanent magnets on rotors and turns of stator windings of a brushless motor-kinetic generator, so to perform a brushless motor-kinetic generator system with energy-saving function.

### BACKGROUND OF THE INVENTION

Presently, all of the well-known electric generators include two DC driving method or AC driving method. However, any kinds of the electric generators is electricity consumptive and energy consumptive. These days, besides to the increasing demand of the household electric generator, the demand of the motor electric generator of the electric car is a kind of increasing application. Especially, when the demand of related market of the electric car is increased, the demand of the battery is also increased day by day, so the total demand of the worldwide electric car market will be extremely huge. The battery material is limited and polluted, when the demand of the batteries increases, the effectiveness to the environment is larger. This is a problem which needs to be solved quickly.

In addition, with the improvement of the motor design technology, it is a worldwide common consensus that the new energy car should replace the fuel car, and the new energy car will be into growth region in several years. The driving motor system of the new energy car will be the most important performance index. For the motor type, the ratio of the permanent magnetic synchronized motor is bigger than the ratio of the AC asynchronous motor in the amount of the installed driving motors of the new energy car. The permanent magnetic synchronized motor has high power density design, and the best working efficiency can be reached more than 95%. The rate of the installed driving motors in the market is larger due to it can provide the most motive power and the acceleration. On the other hand, the AC asynchronous motor is cheaper and more stable, but it has inherent limitations such as the power density is lower, the controlling system is more complex and the speed adjusting range is small. On the contrary, the performance of the car is limited.

### SUMMARY OF THE INVENTION

According to above drawbacks, an object of the invention is to provide an electric generator with energy-saving function to satisfy requirements from industrial communities.

Thus, it is another object of the present invention is to provide an energy-saving brushless motor-kinetic generator, comprising: a housing fixed at a first side cover and a second side cover; a primary stator ferrite core fixed on the housing having a circular disc body with a through hole at center, a high counter-electromotive force winding set with a primary turn number disposing on the circular disc body of the primary stator ferrite core, and the primary stator ferrite core includes a first side and a second side opposite to the first side; a first electric generator set and a second electric generator set nearly disposed at opposite sides of the primary stator ferrite core, wherein the primary stator ferrite core, the first electric generator set and the second electric generator set are disposed inside the housing; wherein the first electric generator set is disposed near the first side of the primary stator ferrite core, the first electric generator set further includes: a first stator ferrite core fixed on the housing is a circular disc body with a through hole at center, a high counter-electromotive force winding set with a first coil pole number disposed on the circular disc body of the first stator ferrite core, and the first stator ferrite core further including a third side and a fourth side opposite to the third side; a first rotor including a fifth side and a sixth side opposite to the fifth side, the first rotor disposing near the third side of the first stator ferrite core by the fifth side and near the first side of the primary stator ferrite core by the sixth side, wherein the first rotor includes a first ring-shaped disc graft, a plurality of permanent magnets are disposed on two sides of the first ring-shaped disc graft, and center of the first ring-shaped disc graft further includes a connection hole; a second rotor disposed near the fourth side of the first stator ferrite core includes a second ring-shaped disc graft, a plurality of permanent magnets disposing on one side of the second ring-shaped disc graft, and center of the second ring-shaped disc graft further including a second connection hole; and a first connection device, having a hollow columnar body and including a first end and a second end opposite to the first end, wherein the first connection device is passed through the through hole of the circular disc body of the first stator ferrite core, fixed the first rotor at the first end through the connection hole of the first rotor, and fixed the second rotor at the second end through the connection hole of the second rotor; wherein the second electric generator set is disposed at the second side of the primary stator ferrite core, the second electric generator set further includes: a second stator ferrite core fixed on the housing having a circular disc body with a through hole at center of the circular disc body, wherein a high counter-electromotive force winding set with a second coil pole number is disposed on the circular disc body of the second stator ferrite core, and the second stator ferrite core further includes a seventh side and a eighth side opposite to the seventh side; a third rotor including a ninth side and a tenth side opposite to the ninth side, the third rotor disposing near the seventh side of the second stator ferrite core by the ninth side and near the second side of the primary stator ferrite core by the tenth side, wherein the third rotor includes a third ring-shaped disc graft, a plurality of permanent magnets are disposed on two sides of the third ring-shaped disc graft, and center of the third ring-shaped disc graft further includes a connection hole; a fourth rotor disposed near the eighth side of the second stator ferrite core, wherein the fourth rotor further includes a fourth ring-shaped disc graft, a plurality of permanent magnets are disposed on one side of the fourth ring-shaped disc graft, and center of the fourth ring-shaped disc graft further includes a fourth connection hole; and a second connection device, having a hollow columnar body and including a third end and a fourth end opposite to the third end, wherein the second connection device is passed through the connection hole of the circular disc body of the second stator ferrite core, fixed the third rotor at the third end through the connection hole of the third rotor, and fixed the fourth rotor at the fourth end through the connection hole of the fourth rotor; wherein a through hole is disposed at center area of the first side cover corresponded to hollow opening region of the first end of the first connection device, and another through hole is disposed at center area of the second side cover corresponded to hollow opening region of the fourth end of the second connection device; and a rotating shaft being a columnar body used to penetrate the hollow opening regions of the first connection deice and the second connection device, wherein the rotating shaft is fixed to the first connection deice and the second connection device.

In order to achieve above objects, the invention provides an energy-saving brushless motor-kinetic generator, comprising: a housing fixed at a first side cover and a second side cover; a primary stator ferrite core fixed on the housing having a circular disc body with a through hole at center, wherein a high counter-electromotive force winding set with a primary turn number is disposed on the circular disc body of the primary stator ferrite core, and the primary stator ferrite core includes a first side and a second side opposite to the first side; a first electric generator set and a second electric generator set nearly disposed at opposite sides of the primary stator ferrite core, wherein the primary stator ferrite core, the first electric generator set and the second electric generator set are disposed inside the housing; and a connection device having a hollow columnar body included a first end and a second end, wherein the connection device is passed through the through hole of the circular disc body of the primary stator ferrite core, fixed at the first electric generator set by the first end and fixed at the second electric generator set by the second end; wherein the first electric generator set is disposed near the first side of the primary stator ferrite core, the first electric generator set further includes: a first stator ferrite core fixed on the housing having a circular disc body with a through hole at center, a high counter-electromotive force winding set with a first coil pole number is disposed on the circular disc body of the first stator ferrite core, and the first stator ferrite core further includes a third side and a fourth side opposite to the third side; a first rotor includes a fifth side and a sixth side opposite to the fifth side, the first rotor is disposed near the third side of the first stator ferrite core by the fifth side and near the first side of the primary stator ferrite core by the sixth side, wherein the first rotor includes a first ring-shaped disc graft, a plurality of permanent magnets are disposed on two sides of the first ring-shaped disc graft, and center of the first ring-shaped disc graft further includes a first connection hole; and a second rotor disposed near the fourth side of the first stator ferrite core includes a second ring-shaped disc graft, wherein a plurality of permanent magnets are disposed on one side of the second ring-shaped disc graft, and center of the second ring-shaped disc graft further includes a second connection hole; wherein the first end of the connection device is passed through the through hole of the circular disc body of the first stator ferrite core, and fixed the first rotor and the second rotor at the first end through the connection hole of the first rotor and the connection hole of the second rotor; wherein the second electric generator set is disposed near the second side of the primary stator ferrite core, the second electric generator further includes: a second stator ferrite core fixed on the housing having a circular disc body with a through hole at center, a high counter-electromotive force winding set with a second coil pole number is disposed on the disc body of the second stator ferrite core, and the second stator ferrite core further includes a seventh side and an eighth side opposite to the seventh side; a third rotor includes a ninth side and a tenth side opposite to the ninth side, the third rotor is disposed near the seventh side of the second stator ferrite core by the ninth side and near the second side of the primary stator ferrite core by the tenth side, wherein the third rotor includes a third ring-shaped disc graft, a plurality of permanent magnets are disposed on two sides of the third ring-shaped disc graft, and center of the third ring-shaped disc graft further includes a connection hole; and a fourth rotor disposed near the eighth side of the second stator ferrite core includes a fourth ring-shaped disc graft, a plurality of permanent magnets are disposed on one side of the fourth ring-shaped disc graft, and center of the fourth ring-shaped disc graft further includes a fourth connection hole; wherein the second end of the connection device is passed through the through hole of the ring-shaped body of the second stator ferrite core; wherein a through hole is disposed at center region of the first side cover corresponded to hollow region of the first end of the connection device, and another through hole is disposed at center region of the second side cover corresponded to hollow region of the second end of the connection device.

In addition, the silicon steel plate structure disclosed by the present invention can increase heat dissipating space and raise heat dissipating efficiency. The housing is manufactured by heat dissipation material of aluminum, when heat is produced from rotating magnetic field formed by the energized coil by the stator, so heat dissipation rate of the stator of the motor can be decreased to increase the whole efficiency by dissipating heat from the aluminum housing.

Furthermore, in the energy-saving brushless motor-kinetic generator disclosed by the present invention, according to configuration of the primary turn number of the high counter-electromotive force winding set of the primary stator ferrite core, the energy-saving brushless motor-kinetic generator disclosed by the present invention can perform low energy-consumption function.

The energy-saving brushless motor-kinetic generator can further perform high-speed operation and solve the high efficiency requirement in a wide rotational speed range simultaneously by configuration of the primary turn number of the high counter-electromotive force winding set of the primary stator ferrite core and the pole number of permanent magnets on the adjacent first rotor.

The energy-saving brushless motor-kinetic generator can also perform good dynamic properties, high efficiency of whole operation and high reliability simultaneously by adjusting the primary turn number of the high counter-electromotive force winding set of the primary stator ferrite core, the first turn number of the high counter-electromotive force winding set of the first stator ferrite core of the first electric generator set and the second turn number of the second stator ferrite core of the second electric generator set.

According to the above description, the energy-saving brushless motor-kinetic generator of the present invention can provide multiple sum of electric power by only providing a few electric power. Specially, the present invention can further provide an energy saving of power multiplication system (ESPMS) by elastic design of structure. The ESPMS can applied on several high power-assumption products such as electric cars, domestic electric power, industrial electric power or the like.

### BRIEF DESCRIPTION OF THE DRAWINGS

Fig. 1 is a structural explosion view of the energy-saving brushless motor-kinetic generator of the present invention;
Fig. 2 is a structural view of the stator of the energy-saving brushless motor-kinetic generator of the present invention;
Fig. 3 is a structural view of the rotor of the energy-saving brushless motor-kinetic generator of the present invention;
Fig. 4 is a schematic view of a single module of the energy-saving brushless motor-kinetic generator of the present invention; and
Fig. 5 is an electric generation system composed of the energy-saving brushless motor-kinetic generator of the present invention.

### DETAILED DESCRIPTION OF THE PREFERRED EMBODIMENT

The advantages and characteristics of the invention and the way to achieve the purpose of the invention will be easily understood by referring to the exemplary embodiments and the drawings. However, the invention can be embodied by different forms and should not be understood that the embodiments herein are limited to the invention. On the contrary, for persons ordinarily skilled in the art, the provided embodiments will express the scope of the present invention more thoroughly, more wholly and more completely.

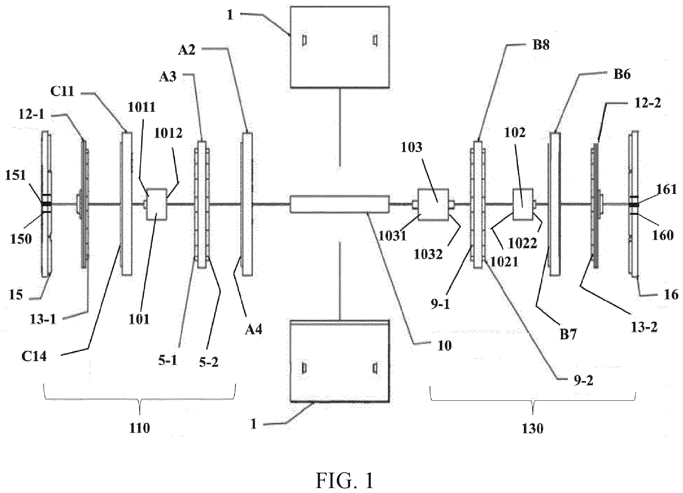

Fig. 1 is a structural explosion view of the energy-saving brushless motor-kinetic generator of the present invention. Please refer to Fig. 1, the energy-saving brushless motor-kinetic generator of the present invention includes a housing (1), a primary stator ferrite core A (2) disposed inside the housing (1), a first electric generator set (110) and a second electric generator set (130), in which the primary stator ferrite core A (2) is used as an input device of the first electric generator set (110) and the second electric generator set (130). The first electric generator set (110) and the second electric generator set (130) are nearly disposed at opposite sides of the primary stator ferrite core A (2), in which the second electric generator set (130) is composed of a stator ferrite core B (6), a rotor B (8) and a rotor C1 (12-1), the first electric generator set (110) is composed of a stator ferrite core C (11), a rotor A (3) and a rotor C2 (12-2). The rotor C1 (12-1) and the rotor C2 (12-2) are disposed respectively at outermost of left and right side of the energy-saving brushless motor-kinetic generator. In a preferred embodiment, the rotor C1 (12-1) and the rotor C2 (12-2) can be respectively connected on one side of a first connection device (101) and one side of a second connection device (102), in which both of the first connection device (101) and the second connection device (102) have hollow columnar body and include two ends opposite with each other. Thus, a rotating shaft (10) can be used to pass through the hollow first connection device (101) and the second connection device (102), and then a fastening member is used to fasten the first connection device (101), the second connection device (102) and the rotating shaft (10) together. Therefore, the rotor A (3), the rotor B (8), the rotor C1 (12-1) and the rotor C2 (12-2) can be connected with each other.

Next, structure of the energy-saving brushless motor-kinetic generator of the present invention. will be describe. At first, please refer to Fig. 1, the primary stator ferrite core A (2) is used as an input device to drive the first electric generator set (110) and the second electric generator set (130). The primary stator ferrite core A (2) is fixed inside the housing (1), and a high counter-electromotive force winding set A (4) with a primary turn number is disposed on the primary stator ferrite core A (2). The rotor A (3) is connected at one end (1012) of the first connection device (101) and disposed near one side of the primary stator ferrite core A (2) opposite to the high counter-electromotive force winding set A (4). In addition, a pair of permanent magnet A (5-1) and permanent magnet A (5-2) are disposed on both of two sides of the rotor A (3), in which different pole numbers of permanent magnets can be used as the permanent magnet A (5-1) and the permanent magnet A (5-2). A primary turn number of the high counter-electromotive force winding set A (4) of the primary stator ferrite core A (2) is lower than a first turn number of a high counter-electromotive force winding set C (14) of the first electric generator set (110) and a second turn number of a high counter-electromotive force winding set B (7) of the second electric generator set (130), so the primary stator ferrite core A (2) can be induced to produce high carrying capacity. Thus, the energy-saving brushless motor-kinetic generator of the present invention has high carrying capacity by adjusting the primary turn number of the high counter-electromotive force winding set of the primary stator ferrite core A (2) and the pole number of the permanent magnets A (5-2) disposed on the rotor A (3) near the primary stator ferrite core A (2). In an embodiment, when the pole number of the permanent magnets A (5-2) of the rotor A (3) is lower, the rotating speed of the rotor A (3) is faster. In another preferred embodiment, the pole number of the permanent magnets A (5-2) is low due to torque force acquired from the rotor when the rotor is rotating. For example, the pole number of permanent magnets A (5-2) of the rotor A (3) is 12.

Please refer to Fig.1, the second electric generator set (130) which is used as an output device is disposed on one side of the primary stator ferrite core A (2). The second electric generator set (130) is composed of a stator ferrite core B (6), a rotor B (8) and a rotor C1 (12-1), in which the stator ferrite core B (6) is fixed inside the housing (1), the rotor B (8) is connected on a first end (1021) of a second connection device (102) and disposed near one side of the stator ferrite core B (6). A high counter-electromotive force winding set B (7) with a second turn number is disposed on the stator ferrite core B (6), and a pair of permanent magnet (9-1) and permanent magnet (9-2) are disposed on the rotor B (8) near the high counter-electromotive force winding set B (7), in which different pole numbers of permanent magnets can be used as the permanent magnet (9-1) and the permanent magnet (9-2). Specially, the rotor B (8) and the rotor C2 (12-2) are disposed space apart from each other. A set of permanent magnet C2 (13-2) is disposed on the rotor C2 (12-2), and a configuration method of pole number of the permanent magnet C2 (13-2) is different from the pole number of the permanent magnets disposed on the rotor B (8). Thus, the second electric generator set (130) can produce high rotating speed and a rated working point can be used as a functional point of high-speed carrying capacity by the same turn number configuration method of the second turn number of the high electromotive force winding set of the stator ferrite core B (6) and the pole number of the permanent magnet B (9-2) of the rotor B (8).

Furthermore, please refer to Fig. 1, the first electric generator set (110) is disposed near the other side of the primary stator ferrite core A (2), and the first electric generator set (110) is also used as an output device. The first electric generator set (110) includes a stator ferrite core C (11), a rotor A (3) and a rotor C1 (12-1), in which the stator ferrite core C (11) is fixed inside the housing (1), a set of high counter-electromotive force winding set C (14) is disposed on the stator ferrite core C (11), and the stator ferrite core C (11) is disposed spaced apart from the other side of the rotor A (3). The rotor C1 (12-1) is nearly disposed on one side of the high counter-electromotive force winding set C (14). Specially, the rotor C1 (12-1) is only disposed on one side of the high counter-electromotive force winding set C (14), and a permanent magnet C1 (13-1) is disposed on one side of the rotor C1 (12-1) faced to the stator ferrite core C (11), in which configuration method of the pole number of the permanent magnet C1 (13-1) can be the same as configuration method of the pole number of one side of the permanent magnet A (5-1). Likewise, configuration method of a pole number of the high counter-electromotive force winding set of the stator ferrite core C (11) can be the same as a pole number of the permanent magnet A (5-1) of the rotor A (3) near the stator ferrite core C (11). The first electric generator set (110) can produce high rotating speed and a rated working point can be used as a functional point of high-speed carrying capacity.

As a whole, in the energy-saving brushless motor-kinetic generator of the present invention, even if the permanent magnet C1 (13-1) of the rotor C1 (12-1) and the permanent magnet C2 (13-2) of the rotor C2 (12-2) are disposed at outermost of the left and the right side of the energy-saving brushless motor-kinetic generator, however, the configuration method of the pole number of the permanent magnet C1 (13-1) is the same as the pole number of the permanent magnet C2 (13-2). According to the configuration method of structure and pole numbers of permanent magnet C1 (13-1) and the permanent magnet C2 (13-2), the energy-saving brushless motor-kinetic generator of the present invention can become a bilateral symmetry electric generator set which will be described herein.

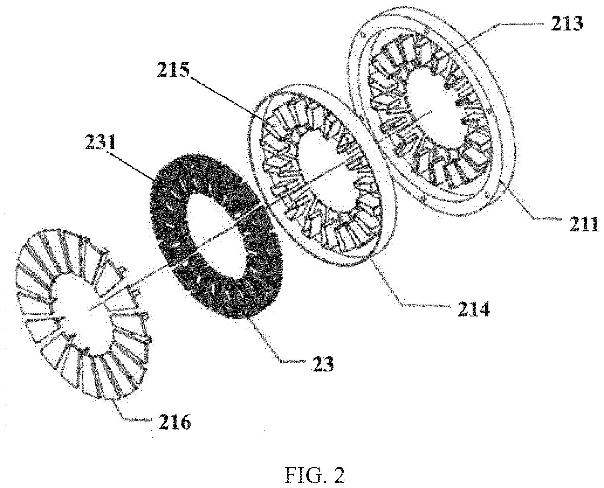

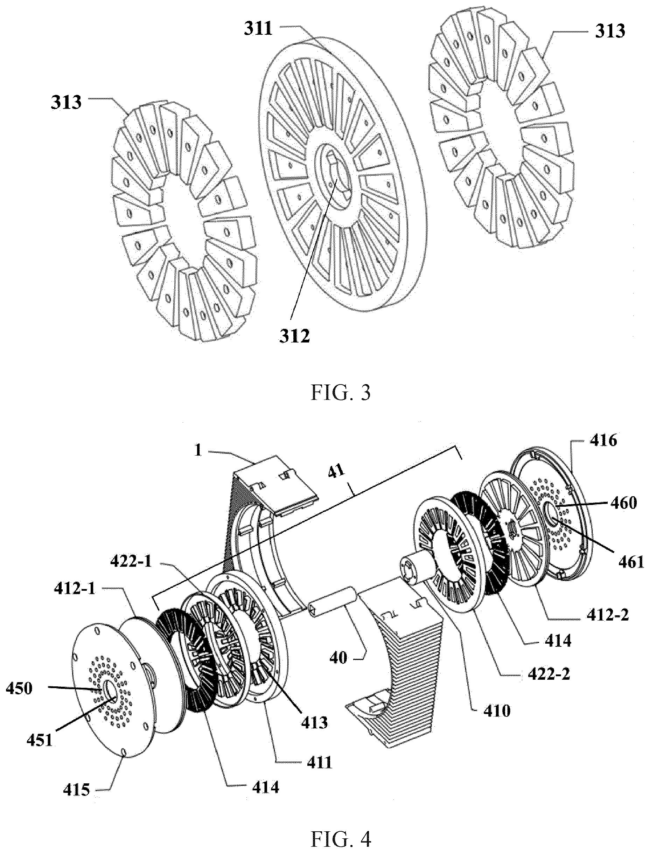

Structure of the stator ferrite core will be described herein after descriptions of the relative positions of primary stator ferrite core A (2), the first electric generator set (110), the second electric generator set (130) and the structure of each of the electric generator set. In the present invention, each of the stator ferrite core has the same structure. However, in order to cooperate with a preferred embodiment, turn number of a plurality of the winding sets (such as element 215 in Fig. 3) of high counter-electromotive force winding sets of each of the stator ferrite core can be designed as the same or different turn number according to different design configurations. Thus, the present invention is not limited on turn number of the stator ferrite core. In addition, refer to Fig. 2, the stator ferrite cores of the present invention are fixed inside the housing (1), where fixing method is not a main technical mean in the present invention, so the method of how to fix inside the housing (1) is not limited in the present invention.

Please refer to Fig. 2, Fig. 2 is used to describe structure of each of the stator ferrite core in the present invention. The stator ferrite core in the present invention includes: a primary stator ferrite core A (2), a stator ferrite core B (6) and a stator ferrite core C (11). Each of the stator ferrite core has a hollow circular disc body structure which is compressed by several silicon steel plates, and a plurality of positioning grooves (213) spaced apart from each other are disposed around center of the circle disc body (211). In an embodiment, a plurality shapes can be selected as the positioning grooves (213), such as a structure like triangle. Therein, the silicon steel plates of the stator of the present invention can increase heat dissipating space and heat dissipation efficiency. Next, an insulated coil-fixing sheath (214) is disposed on the circular disc body (211), in which a plurality of insulated sheaths (215) with the same shape and structure as the stator ferrite cores are disposed on the insulated coil-fixing sheath (214) corresponded to the positioning grooves (213), and the positioning grooves (213) can be merged with the insulated coil-fixing sheath (214) into a single whole. Therein, insulating material can be used as the insulated coil-fixing sheath (214). Then, a winding cartridge (231) which is included with high counter-electromotive force and formed by a winding set (23) with a plurality of turn numbers is disposed on the insulated coil-fixing sheath (214), where each of the winding cartridge is fixed and corresponded on the positioning grooves (213) with insulated sheaths. Finally, a coil-positioning cover (216) can be selected to dispose on the winding cartridge (231), and structure of the coil-positioning cover (216) is corresponded to the winding cartridge (231) with a plurality of pole numbers, in which transparent plastic material can be selected as material of the coil-positioning cover (216). Therefore, the winding cartridge (231) with the plurality of pole numbers formed by the high counter-electromotive force can be further fixed on the positioning grooves (213) according to configuration of the coil-positioning cover (216).

Next, structure of the rotors in the present invention will be described herein. Please refer to Fig. 3. At first, each of the rotors are composed of a ring-shaped disc graft (311) with a plurality of separated spaces and a plurality of permanent magnets, in which the plurality of permanent magnets are disposed in the plurality of separated spaces of the ring-shaped disc graft (311). The ring-shaped disc grafts (311) of each of the rotors are the same, and material of the ring-shaped disc graft (311) can use a kind of stainless steel. A ring-shaped connection hole (312) is formed at center area of the ring-shaped disc graft (311), and the connection hole (312) is used to connect the first connection device (101) and the second connection device (102). The rotor can be fixed at the first connection device (101) and the second connection device (102) by the connection holes.

After that, structures of the rotor A (3) and the rotor B (8) are the same, in which the structure is that a plurality of permanent magnets (313) are disposed at both two sides of the ring-shaped disc graft (311). Therein, pole number configurations of the plurality of the permanent magnets (313) of two sides of the rotor A can be different as two sides of the rotor B (8). Structure of the rotor C1 (12-1) is the same as the rotor C2 (12-2), where a plurality of permanent magnets C1 (13-1) and C2 (13-2) are only disposed on one side of the ring-shaped disc graft (311), and pole numbers of the permanent magnets C1 (13-1) and C2 (13-2) are the same.

In addition, magnetic field strength of each of the permanent magnets can be selected in a range of N40 to N52, for example, N40 means that the magnetic field strength is 4000 Gauss. Moreover, material selection of the permanent magnet of the present invention can be thermal resistance materials, for example, the thermal resistance must over than 200°C. Furthermore, in an embodiment of the present invention, shapes of each of the permanent magnets can be selected to be similar to the winding cartridge (231) with a plurality of turn numbers formed by high counter-electromotive force winding set, for example, a structure like triangle can be selected for the permanent magnet.

After description of structure of all stator ferrite core and rotors for the primary stator ferrite core (2), the first electric generator set (110) and the second electric generator set (130), two kinds of connecting structure of the energy-saving brushless motor-kinetic generator of the present invention will be described herein. It should be noticed that configuration of relative positions for the first connecting structure and the second connecting structure at the primary stator ferrite core (2), the first electric generator set (110) and the second electric generator set (130) are completely the same. The difference between the two connecting structure is only existed that connection is performed by different connecting structure, and size of the energy-saving brushless motor-kinetic generators will be different after using different connecting structure.

At first, a first kind of connecting structure (i.e., structure 1) for the energy-saving brushless motor-kinetic generator of the present invention will be described herein. Please refer to Fig. 1, the first connection device (101) located at left side of Fig. 1 can pass through the hollow portion of the stator ferrite core C (11), and the first connection device (101) will not contact with the stator ferrite core C (11), in which the first connection device (101) has a hollow columnar body with two ends and passes through the hollow portion of the stator ferrite core C (11). After that, one end (1011) of the first connection device (101) is connected to the connection hole (312) of the rotor C1 (12-1), and the other end (1012) of the first connection device (101) is connected to the connection hole (312) of the rotor A (3). Apparently, the stator ferrite core C (11) is disposed spaced apart from the rotor C1 (12-1) and the rotor A (3) after the two ends of the first connection device (101) are connected to the rotor C1 (12-1) and the rotor A (3) separately, in which the stator ferrite core C (11) is fixed on the housing (1). Next, the second connection device (102) located at right side of Fig. 1 can pass through the hollow portion of the stator ferrite core B (6), and the second connection device (102) will not contact with the stator ferrite core B (6). After that, one end (1021) of the second connection device (102) is connected to the connection hole (312) of the rotor C2 (12-2), and the other end (1022) of the second connection device (102) is connected to the connection hole (312) of the rotor B (8). Apparently, the stator ferrite core B (6) is disposed spaced apart from the rotor C2 (12-2) and the rotor A (3), in which the stator ferrite core B (6) is fixed on the housing (1). The stator ferrite core B (6) and the stator ferrite core C (11) described above are used as output devices.

Furthermore, a rotating shaft (10) is passed through hollow portion of the primary stator ferrite core A (2), and the rotating shaft (10) will not be contacted to the primary stator ferrite core A (2), in which the primary stator ferrite core A (2) is used as output device. Additionally, two ends of the rotating shaft (10) are passed through the hollow first connection device (101) and the hollow second connection device (102), a fastening member is used to fasten the first connection device (101), the second connection device (102) and the rotating shaft (10) together. Hence, the rotor A (3), the rotor B (8), the rotor C1 (12-1) and the rotor C2 (12-2) can be connected with each other. Thus, when the rotating shaft (10) is rotating, all of the rotors will be rotated together along the same orientation through the first connection device (101) and the second connection device (102). In addition, in an embodiment of the present invention, metal material can be selected as material of the first connection device (101) and the second connection device (102) such as aluminum alloy, especially a kind of heat-treated aluminum alloy. Metal material can be selected as material of the rotating shaft (10) such as stainless steel.

At last, two sides of the housing (1) are connected to a first side cover (15) and a second side cover (16) into a single whole, in which a through hole (151) is disposed at center portion of the first side cover (15) and the through hole (151) is corresponded to hollow opening region of one end (1011) of the first connection device (101), a through hole (161) is disposed at center portion of the second side cover (16) and the through hole (161) is corresponded to hollow opening region of the other end (1012). In an actual operating process, the two ends of the rotating shaft (10) can be passed through the through hole (151) and the through hole (161).

According to the structure 1 described above, when the energy-saving brushless motor-kinetic generator of the present invention is working rapidly, the through hole (151) of the first side cover (15) or the through hole (161) of the second side cover (16) may be collided with or made friction to the rotating shaft (10), so problems such as energy loss or heat generation will be occurred. Thus, in a preferred embodiment of the present invention, a bearing (150) or a bearing (160) are disposed at center region of the first side cover (15) or the second side cover (16), in which a through hole (151) and a through hole (161) are disposed at center of the bearing (150) and the bearing (160). Likewise, the through hole (151) is corresponded to center opening region of one end (1011) of the first connection device (101) and the through hole (161) is corresponded to center opening region of the other end (1022) of the second connection device (102), so the rotating shaft (10) can be passed through the through hole (151) of the bearing (15) and the through hole (16) of the bearing (16). Thus, when the through hole (151) and/or the through hole (151) collided with or made friction to the rotating shaft (10) during the energy-saving brushless motor-kinetic generator working rapidly, the bearing (151) and/or bearing (161) will be rotated by the rotating shaft (10), so to decrease problems such as energy loss or heat generating. In an embodiment of the present invention, size of the rotating shaft (10) may be changed with main body size of the electric generator. For example, axis of the rotating shaft (10) may be a 20 mm diameter stainless steel column, and diameters of the through hole (151) of the bearing (150) and the through hole (161) of the bearing (160) are greater than or equal to 21mm.

Next, a second kind of connecting structure (i.e., structure 2) for the energy-saving brushless motor-kinetic generator of the present invention will be described herein. Please continue to refer Fig. 1. The structure 2 is performed by a third connection device (103) combining the primary stator ferrite core (2), the first electric generator set (110) and the second electric generator set (130) together. The third connection device (103) has a hollow columnar body with a first end (1031) and a second end (1032). Similarly, the primary stator ferrite core A (2) is located as center position of the present invention, and the stator ferrite core B (6) and the stator ferrite core C (11) are disposed at two sides of the primary stator ferrite core A (2). These stator ferrite cores are fixed inside the housing (1), so the third connection device (103) can be passed through the primary stator ferrite core A (2), the stator ferrite core B (6) and the stator ferrite core C (11) and the third connection device (103) will not be touched with the primary stator ferrite core A (2), the stator ferrite core B (6) and the stator ferrite core C (11). Therein, the primary stator ferrite core A (2) is used as input device, and the stator ferrite core B (6) and the stator ferrite core C (11) are used as output devices. At the same time, the rotor A (3) and the rotor C1 (12-1) are nearly connected to the first end (1031) of the third connection device (103), so the rotor C1 (12-1) and the rotor A (3) are disposed on left and right sides of the stator ferrite core C (11) on the first end (1031). In one embodiment, the rotor A (3) and the rotor C1 (12-1) are nearly fastened on the first end (1031) of the third connection device (103) through a fastening member. Besides, the rotor B (9) and the rotor C2 (12-2) are fastened on a second end (1032) of the third connection device (103), so the rotor B (9) and the rotor C2 (12-2) are disposed on left and right sides of the second end (1032). In addition, the fastening member can be a kind of screw.

It is clear that after all rotors shown in Fig. 1 are connected together through the third connection device (103) in the present invention, when the primary stator ferrite core A (2) is connected to a power source, the rotor A (3) and the rotor B (8) will be driven to rotate, and the rotor C1 (12-1) and the rotor C2 (12-2) will also be rotate along the same orientation due to the connection of the rotor A (3), the rotor B (8) and the third connection device (103). In an embodiment of the present invention, metal material can be used as the third connection device (103) such as aluminum alloy, especially heat-treated aluminum alloy.

At last, a first side cover (15) and a second side cover (16) are connected to the housing (1) into a single whole, in which a through hole (151) disposed at center region of the first side cover (15) is corresponded to hollow opening region of the first end (1031) of the third connection device (103), and a through hole (161) disposed at center region of the second side cover (16) is corresponded to hollow opening region of the second end (1032) of the third connection device (103). In addition, with respect to an embodiment of structure 2 of the present invention, a bearing (150) and/or a bearing (160) is/are disposed at center region of the first side cover (15) and/or the second side cover (16). A through hole (151) is included at center of the bearing (150), a through hole (161) is included at center of the bearing (160), the bearing through hole (151) of the first side cover (15) is corresponded to hollow opening region of the first end (1031) of the third connection device (103), and the bearing through hole (161) of the second side cover (16) is corresponded to hollow opening region of the second end (1032) of the third connection device (103). In addition, purpose of disposing the bearing (150) and/or bearing (160) at center region of the first side cover (15) and/or the second side cover are the same as the above description, which will not describe herein.

In addition, according to structure 2 of the present invention, the energy-saving brushless motor-kinetic generator further includes a rotating shaft (10) to pass through center region of the third connection device (103) and connect to the third connection device (103). Therein, a fastening member can be used as the connecting method described above, such as a kind of screw. Thus, after the rotating shaft (10) is passed through center region of the third connection device (103) and connected to the third connection device (103), when the primary stator ferrite core A (2) is connected to an input power source, the rotor A (3) and the rotor B (8) are driven to rotate by the primary stator ferrite core A (2), so the rotor C1 (12-1), the rotor C2 (12-2) and the third connection device (103) will be rotated along the same orientation.

It is clear that the primary stator ferrite core (2), the first electric generator set (110) and the second electric generator set (130) can be combined by only one third connection device (103) as the energy-saving brushless motor-kinetic generator of the present invention. In addition, volume of the energy-saving brushless motor-kinetic generator of the present invention can be minimized and higher output power can be obtained in the embodiment. For example, distances between the rotor C1 (12-1), the rotor A (6) and the stator ferrite core C (11) of the first end (1031) of the third connection device (103) at left side in Fig. 1 can be keep about 1 mm. Similarly, distances between the rotor C2 (12-2), the rotor B (8) and the stator ferrite core B (6) of the second end (1032) of the third connection device (103) at right side in Fig. 1 can be also keep about 1 mm.

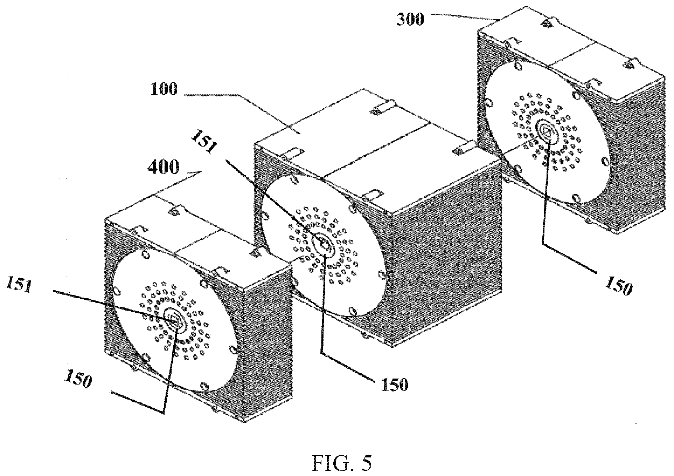

Finally, a whole structure of the primary stator ferrite core (2), the first electric generator set (110) and the second electric generator set (130) is disposed inside the housing (1), and when the first side cover (15) and the second side cover (16) are connected to two sides of the rectangular housing (1), the energy-saving brushless motor-kinetic generator of the present invention can be obtained, such as shown in Fig. 5. The energy-saving brushless motor-kinetic generator of the present invention can be cascaded with other electric generators by the rotating shaft (10) according to the through hole (151) of center region of the bearing (150) and the through hole (161) of center region of the bearing (160).

According to the above description, it can be described in another way, please refer to Fig. 1 again. The primary stator ferrite core A (2) is used as a center of the energy-saving brushless motor-kinetic generator of the present invention and an input end. The first electric generator set (110) is formed at left side of the primary stator ferrite core A (2) (i.e., stator and rotor structure formed by the above first connection device (101)), the second electric generator set (130) is formed at right side of the primary stator ferrite core A (2) (i.e., stator and rotor structure formed by the above second connection device (102)), in which the first electric generator set (110) is symmetric or the same as the second electric generator set (120), and both of the first electric generator set (110) and the second electric generator set (120) are used as power output electric generator sets.

According to the above description, in a preferred embodiment of the present invention, 18 is selected as the first turn number of the high counter-electromotive force A (4) disposed on the primary stator ferrite core A (4), which is used as a driving device of input end. On the other hand, 24 is selected as the second turn number of the high counter-electromotive force B (7) and the turn number of the high counter-electromotive force C (14), which are selected as output devices. It is clear that with respect to the stator ferrite cores, the turn number of the stator ferrite core of output end is larger than the turn number of the stator ferrite core of input end.

Furthermore, with respect to pole numbers of permanent magnets of the rotors, in a preferred embodiment of the present invention, the rotor of the left side first electric generator set (110) is symmetric to the rotor of the right side second electric generator set (130), and pole number of the rotors of the first electric generator set (110) is also the same as pole number of the rotors of the second electric generator set (130) at the same time. In a preferred embodiment of the present invention, pole number of the permanent magnets (5-2) of the rotor A (3) near one side of the primary stator ferrite core A (2) of the first electric generator set (110) is 12, and pole number of the permanent magnets (5-1) of the rotor A (3) near one side of the stator ferrite core C (11) is 16, in which configuration of the pole number (i.e., 16) of the permanent magnets (5-1) of the rotor A (3) is the same as pole number of the permanent magnets (13-1) of the rotor C1 (12-1) near left side of the rotor A (3), such that the pole number of the first permanent magnet (13-1) of the rotor C1 (12-1) is selected as 16. Similarly, pole number of the permanent magnet B (9-1) of the rotor B (8) near one side of the primary stator ferrite core A (2) in the second electric generator set (130) is 12, and pole number of the permanent magnet B (9-2) of the rotor B (8) near one side of the ferrite core B (6) is 16, in which configuration of the pole number (i.e., 16) of the permanent magnet B (9-2) at this side is the same as pole number (i.e., 16) of the permanent magnet C2 (13-2) of the rotor C2 (12-2) near right side of the rotor B (8). Apparently, total pole numbers of the permanent magnet (5-1) and the permanent magnet (5-2) of the rotor A (3) of the first electric generator (110) are the same as total pole numbers of the permanent magnet (9-1) and the permanent magnet (9-2) of the rotor B (8) of the second electric generator (130).

In addition, in an embodiment of the present invention, polarities of each of the permanent magnets of the rotors are disposed of pair by pair of south pole and north pole. For example, as shown in Fig. 1, polarity of the permanent magnets disposed on two sides of the rotor A (3) can be configured to north pole, polarity of the permanent magnet (5-1) can be configured to south pole, polarity of the first permanent magnet (13-1) of the rotor C1 (12-1) can be configured to south pole, and polarity of the second permanent magnet (13-2) of the rotor C2 (12-2) can be configured to north pole. According to the pair by pair of south pole and north pole configuration of the permanent magnets described above, a rated working point can be used as a functional point of high-speed carrying capacity of the energy-saving brushless motor-kinetic generator of the present invention.

Thus, when the energy-saving brushless motor-kinetic generator of the present invention is working, the plurality of turn numbers of the winding sets (215) formed by the high counter-electromotive force winding set of the primary stator ferrite core A (2) is connected to the driving power supply. For example, the power supply can provide an input driving voltage ranged in 36 to 72 Volts (corresponded in 3 to 20 Amps). Each of winding sheaths of the winding sets (215) produces variation of counter-electromotive force by the input driving voltage, so the rotor A (3) and the rotor B (8) can rotate by the permanent magnets on the adjacent rotor A (3) and the rotor B (8) induced by magnetic field of counter-electromotive force of the winding sheaths. According to rotating of the rotor A (2) and the rotor B (8), the rotor C1 (12-1) and the rotor C2 (12-2) can be also rotated along the same orientation by the connection structure of the first connection device (101), the second connection device (102) and the rotating shaft (10). Then, according to rotating of the rotor C1 (12-1) and the rotor C2 (12-2) (disposed at left side of Fig. 1), the plurality of the turn number of the winding set (215) of the stator ferrite core C (11) can produce counter-electromotive by the permanent magnets of the rotor A (3) and the rotor C1 (12-1), so the winding set (215) of the stator ferrite core C (11) can produce and output inductive voltage and current. Similarly, according to rotating of the rotor B (8) and the rotor C2 (12-2) (disposed at right side of Fig. 1), the winding sheaths of the winding sets (215) including high counter-electromotive winding set of the stator ferrite core (6) produces counter-electromotive force by the permanent magnets of the rotor B (8) and rotor C2 (12-2), so the winding set (215) of the B stator ferrite core (6) can produce and output inductive current.

In addition, the housing (1) of the energy-saving brushless motor-kinetic generator (100) of the present invention is formed by heat-sinking material of aluminum. The heat produced by rotating the magnetic field due to hot-wired coil used by the of the stator ferrite core can be dispersed by the aluminum housing (1), so to decrease the heating value of the stator ferrite core and increase whole efficiency.

According to actual testing, after applying load on the output end of the energy-saving brushless motor-kinetic generator (100) of the present invention, the actual measuring result is shown in Table 1. Therein, in a preferred embodiment of the present invention, a 20 ohm load is used as the loader, a 44 turns copper coil with diameter of 0.8 mm is used as each of the coil of each of the stator ferrite core, and magnetic strength of each of the permanent magnets is N45.

**Table 1**

| Structure | Input voltage (DC) / current( A) | Output voltage (DC) / current (A) | Output efficiency (Pt/Pi) |
|---|---|---|---|
| Structure 1 | VDC=71.9 Volts 1=11.5 Amps rotor rotating speed = 3000 RPM input power (Pi)=826.85w | the first electric generator (110) : VDC=91.9 Volts 1=6.3 Amps the first output power (Po1)=579w | 1.4 |
| | | the second electric generator (130) : VDC=92.5 Volts 1=6.4 Amps second output power (Po2)= 592w | |
| | | total output power Pt=Po1+Po2=1171 | |
| structure | VDC=71.8 Volts | the first electric generator (110): | 1.48 |
| 2 | 1=11.4 Amps input power (Pi)= 818.5w | VDC=93.8 Volts 1=6.6 Amps the first output power (Po1)=619w | |
| | | the second electric generator (130) : VDC=93.6 Volts 1=6.5 Amps the second output power (Po2)=608w | |
| | | total output power Pt=Po1+Po2=1217w | |

The structure of the first electric generator (110) in the energy-saving brushless motor-kinetic generator (100) of the present invention is the same as the second electric generator (130), and the difference of the actual testing output powers of structure 1 (used with the first connection device (101) and the second connection device (102)) is due to differences of magnetic field strengths of the permanent magnets or the gaps between the permanent magnets. The actual testing output power of structure 2 (used with the third connection device (103)) is larger than the output power of structure 1. It is clear that according to the arrangement of the energy-saving brushless motor-kinetic generator of the present invention can earn 1.8 times of output power, so the energy-saving effectiveness can be realized.

Furthermore, please refer to Fig. 4. Fig. 4 is a schematic view of a single module energy-saving brushless motor-kinetic generator of the present invention. As shown in Fig. 4, the single module energy-saving brushless motor-kinetic generator (400) is composed of a stator ferrite core (41) and a pair of rotor (412-1) and rotor (412-2) nearly and separately disposed at two sides of the stator ferrite core (41), in which the rotor (412-1) and the rotor (412-2) are connected through a connection device (410) at two sides of the stator ferrite core (41).

In an embodiment of the single module energy-saving brushless motor-kinetic generator of the present invention, the stator ferrite core (41) is a hollow disc-shaped body (411) fixed at the housing (1). The stator ferrite core (41) is composed by several silicon steel sheets, and a plurality of nearly and separately positioning grooves (413) are disposed at two sides of the hollow disc-shaped body (411). Therein, the heat dissipating space and heat dissipating efficiency are increased due to the silicon steel sheets structure of the stator designed from the present invention. Then, a pair of coil-fixing insulated cover (422-1) and coil-fixing insulated cover (422-2) are disposed at the positioning grooves (413) of two sides of the hollow disc-shaped body (411), and the disc-shaped body (411) on the stator ferrite core (41) is combined with the coil-fixing insulated cover (422-1) and the coil-fixing insulated cover (422-2) together, in which insulated materials can be selected as the coil-fixing insulated cover (422-1) and the coil-fixing insulated cover (422-2). After that, winding sets (414) included with a plurality of turn numbers formed by a high counter-electromotive winding set are disposed separately at the coil-fixing insulated cover (422-1) and the coil-fixing insulated cover (422-2), in which each of winding turns of the winding sets (414) included with the plurality of turn numbers are corresponded to and fixed at the positioning grooves (413) with an insulated cover. Then, according to the rotor (412-1) and the rotor (412-2) adjacently disposed near to the two sides of the stator ferrite core (41), a plurality of permanent magnets (not shown in Fig. 4, and the same as Fig. 3) are only disposed alternately at one side of the winding set (414) of the plurality of turn numbers near to the high counter-electromotive winding set. Therein, the turn number of the winding set (414) of the high counter-electromotive winding set disposed at the coil-fixing insulated cover (422-1) and the coil-fixing insulated cover (422-2) is 24, and the pole numbers of the permanent magnets of the rotor (412-1) and the rotor (412-2) are 16.

Then, providing a connection device (410) to pass through or penetrate the hollow region of the stator ferrite core (41) which is not contact to the stator ferrite core (41). The connection device (410) is a hollow body with two ends, the rotor (412-1) is connected at a first end of the connection device (410), and the rotor (412-2) is connected at a second end of the connection device (410), so the rotor (412-1) and the rotor (412-2) are disposed at two sides of the stator ferrite core (41). Therein, the connecting method of the rotor (412-1) and the rotor (412-2) connected to the (410) is the same as the above description which will not describe herein. At last, two sides of the housing (1) are respectively connected to the first side cover (415) and the second side cover (416) together, in which the center region of the first side cover (415) includes a through hole (451), the through hole (451) is opposite to the hollow opening region of the first end of the connection device (410), the center region of the second side cover (416) includes a through hole (461), and the through hole (461) is opposite to the hollow opening region of the second end of the connection device (410).

Similarly, in the embodiment of the single module energy-saving brushless motor-kinetic generator (400) of the present invention, a bearing (450) or a bearing (460) are disposed at the center regions of the first side cover (415) or the second side cover (416). The center of the bearing (450) and the bearing (460) includes a through hole (151) and a through hole (161) (the bearing (150) and the bearing (450) are the same members, the bearing (160) and the bearing (460) are the same members, and the through hole (151) and the through hole (161) are shown in Fig. 1), in which the through hole (451) is opposite to the hollow opening region of the first end of the connection device (410), and the through hole (461) is opposite to the hollow opening region of the second end of the connection device (410). The purpose of disposing the bearing (450) at the fist side cover (415) or the bearing (460) at the second side cover (416) is the same as the above description, which will not describe herein. In addition, when the single module energy-saving brushless motor-kinetic generator (400) is working, a rotating shaft (40) can be further disposed to pass through the center region of the connection device (410) and connect to the connection device (410), in which a fastening member can be selected as the connecting method, such as screw.

In the structure of the energy-saving brushless motor-kinetic generator of the present invention, the high counter-electromotive force winding sets (414) with 24 grades are further disposed at two surfaces of the ring-shaped body (411) of the stator ferrite core (41), so the electric generating efficiency of the single module energy-saving brushless motor-kinetic generator (400) is better than the high counter-electromotive force winding sets disposing only on one side of the ring-shaped body of the general stator ferrite core.

Finally, as shown in Fig. 5, the energy-saving brushless motor-kinetic generator (100) of the present invention can be cascaded with other electric generators, such as cascaded with only one single module energy-saving brushless motor-kinetic generator (400). The structure of the energy-saving brushless motor-kinetic generator (100) is the same as the embodiment of Fig. 1 which will not be described herein. Therein, one end of the rotating shaft (10) or the rotating shaft (40) is passed through the through hole (151) of the first side cover (15) of the energy-saving brushless motor-kinetic generator (100) and connected to one end of the connection device (101) or the connection device (103), and the other end of the rotating shaft (10) is passed through the through hole (451) of the first side cover (415) of the energy-saving brushless motor-kinetic generator (400) and connected to one end of the connection device (410). According to the cascading of the rotating shaft (10) or the rotating shaft (40), when the primary stator ferrite core A (2) of the energy-saving brushless motor-kinetic generator (100) is energized, the rotor A (3) of the first electric generator (110) and the rotor B (8) of the second electric generator (130) of the energy-saving brushless motor-kinetic generator (100) will be driven to rotate. The connection device (101) or the connection device (103) is rotated by rotating of the rotor A (3), then the rotating shaft (10) or the rotating shaft (40) is rotated by the connection device (101) or the connection device (103), and the connection device (410) is further rotated by the rotating shaft (10) or the rotating shaft (40), so the rotor (412-1) and the rotor (412-2) of the single module energy-saving brushless motor-kinetic generator (400) can be rotated. Finally, according to cascading of the energy-saving brushless motor-kinetic generator (100) and the single module energy-saving brushless motor-kinetic generator (400) of the present invention by connection of the connection device (10) or connection device (40), when the rotor A (3), the rotor B (8), the rotor (412-1) and the rotor (412-2) are rotating, the adjacent first stator ferrite core C (11), the second stator ferrite core B (6) and the stator ferrite core (41) of the single module energy-saving brushless motor-kinetic generator will produce output power.

After the cascading is complete, the output efficiency is 2.3 times which is measured by the same voltage source input conditions, such as shown in Table 2.

**Table 2**

| Structure | input voltage (DC)/ current (A) | output voltage (DC)/ current (A) | output efficiency (Pt/Pi) |
|---|---|---|---|
| structure 2 single module | VDC = 71.9 Volts 1=11.5 Amps Input efficiency (Pi) = 826.85w | first electric generator (110) : VDC=93.8 Volts 1=6.6 Amps | 2.3 |
| | | First output efficiency (Po1) = 619w | |
| | | Second electric generator (130) : VDC=93.6 Volts 1=6.5 Amps Second output efficiency (Po2) = 608w | |
| | | Single module energy-saving brushless motor-kinetic generator (400) : VDC=94.2 Volts 1=7.2 Amps First output efficiency (Po3) = 678w | |
| | | Total output efficiency Pt=Po 1+Po2+Po3=1905w | |

According to the above description, the energy-saving brushless motor-kinetic generator (100) of the present invention can produce over than twice times of electric power by only provide a few electric power. Especially, according to elastic design of the structure of the present invention, when the energy-saving brushless motor-kinetic generator (100) formed by structure 1 or structure 2 through the rotating shaft (10) is cascaded to at least one of the single module energy-saving brushless motor-kinetic generator (400), an energy saving of power multiplication system (ESPMS) can be formed. The ESPMS can applied on a plurality of high usage of electricity products, such as electric cars, household electricity or industrial electricity.

It is clear that the energy-saving brushless motor-kinetic generator (100) or the single module energy-saving brushless motor-kinetic generator (400) of the present invention can be applied on different sizes of products. When the electric generator of the present invention is used as the electric generator module of the electric car, the product size can be miniaturized. For example, the size of the primary electric generator is 200 mm (width) ^{∗} 160 mm (length) when the energy-saving brushless motor-kinetic generator (100) of the present invention is applied on the electric generator of car. On the other hand, the electric generator modules for household electricity or industrial electricity can be produced as larger size products. Thus, the purposes or the sizes of the energy-saving brushless motor-kinetic generator (100) or the single module energy-saving brushless motor-kinetic generator (400) of the present invention will not be limited herein.

The above is only the preferred embodiment of the invention, and the scope of the invention is not limited thereto, that is, the simple equivalent changes and modifications made by the scope of the invention and the description of the invention are all remain within the scope of the invention. Furthermore, terms, such as "first," "second," etc., mentioned in the specification or claims are simply for naming the elements or distinguishing different embodiments or scopes, and thus should not be construed as the upper or lower limit of the number of any element.

## Claims

1. An energy-saving brushless motor-kinetic generator (100), **characterized in that** the energy-saving brushless motor-kinetic generator (100) comprises:
a housing (1) fixed at a first side cover (15) and a second side cover (16);
a primary stator ferrite core (2) fixed on the housing (1) having a circular disc body (211) with a through hole at center, a high counter-electromotive force winding set (4) with a primary turn number disposing on the circular disc body (211) of the primary stator ferrite core (2), and the primary stator ferrite core (2) includes a first side and a second side opposite to the first side;
a first electric generator set (110) and a second electric generator set (130) nearly disposed at opposite sides of the primary stator ferrite core (2), wherein the primary stator ferrite core (2), the first electric generator set (110) and the second electric generator set (130) are disposed inside the housing (1);
wherein the first electric generator set (110) is disposed near the first side of the primary stator ferrite core (2), the first electric generator set (110) further includes:
a first stator ferrite core (11) fixed on the housing (1), which is a circular disc body (211) with a through hole at center, a high counter-electromotive force winding set (14) with a first turn number disposed on the circular disc body (211) of the first stator ferrite core (11), and the first stator ferrite core (11) further includes a third side and a fourth side opposite to the third side;
a first rotor (3) includes a fifth side and a sixth side opposite to the fifth side, the first rotor (3) disposing near the third side of the first stator ferrite core (11) by the fifth side and near the first side of the primary stator ferrite core (2) by the sixth side, wherein the first rotor (3) includes a first ring-shaped disc graft (311), a plurality of permanent magnets (313) are disposed on two sides of the first ring-shaped disc graft (311), and center of the first ring-shaped disc graft (311) further includes a connection hole (312);
a second rotor (12-1) disposed near the fourth side of the first stator ferrite core (2) includes a second ring-shaped disc graft (311), a plurality of permanent magnets (313) disposing on one side of the second ring-shaped disc graft (311), and center of the second ring-shaped disc graft (311) further includes a second connection hole (312); and
a first connection device (101), being a hollow columnar body and includes a first end (1012) and a second end (1011) opposite to the first end (1012), wherein the first connection device (101) is passed through the through hole of the circular disc body (211) of the first stator ferrite core (11), fixed the first rotor (3) at the first end (1012) through the connection hole of the first rotor (3), and fixed the second rotor (12-1) at the second end (1011) through the connection hole of the second rotor (12-1);
wherein the second electric generator set (130) is disposed at the second side of the primary stator ferrite core (2), the second electric generator set (130) further includes:
a second stator ferrite core (6) fixed on the housing (1) having a circular disc body (211) with a through hole at center, wherein a high counter-electromotive force winding set (7) with a second turn number is disposed on the circular disc body of the second stator ferrite core (6), and the second stator ferrite core (6) further includes a seventh side and an eighth side opposite to the seventh side;
a third rotor (8) includes a ninth side and a tenth side opposite to the ninth side, the third rotor (8) disposing near the seventh side of the second stator ferrite core (6) by the ninth side and near the second side of the primary stator ferrite core (2) by the tenth side, wherein the third rotor (8) includes a third ring-shaped disc graft (311), a plurality of permanent magnets (313) are disposed on two sides of the third ring-shaped disc graft (311), and center of the third ring-shaped disc graft (311) further includes a connection hole (312);
a fourth rotor (12-2) disposed near the eighth side of the second stator ferrite core (6), wherein the fourth rotor (12-2) further includes a fourth ring-shaped disc graft (311), a plurality of permanent magnets (313) are disposed on one side of the fourth ring-shaped disc graft (311), and center of the fourth ring-shaped disc graft (311) further includes a fourth connection hole (312); and
a second connection device (102), being a hollow columnar body and including a third end (1022) and a fourth end (1021) opposite to the third end (1022), wherein the second connection device (102) is passed through the through hole of the circular disc body (211) of the second stator ferrite core (6), fixed the third rotor (8) at the third end (1022) through the connection hole (312) of the third rotor (8), and fixed the fourth rotor (12-2) at the fourth end (1021) through the connection hole (312) of the fourth rotor (12-2);
wherein a through hole is disposed at center area of the first side cover (15) corresponded to hollow opening region of the first end (1012) of the first connection device (101), and another through hole is disposed at center area of the second side cover (16) corresponded to hollow opening region of the fourth end (1021) of the second connection device (102); and
a rotating shaft (10) being a columnar body used to penetrate the hollow opening regions of the first connection deice (101) and the second connection device (102), wherein the rotating shaft (10) is connected to the first connection deice (101) and the second connection device (102).

2. The energy-saving brushless motor-kinetic generator (100) of claim 1, wherein the plurality of permanent magnets (313) disposed on the first ring-shaped disc graft (311) of the first rotor (3) of the first electric generator set (110) have different pole numbers.

3. The energy-saving brushless motor-kinetic generator (100) of claim 2, wherein pole number of the permanent magnets (313) disposed on the sixth side of the first rotor (3) is larger than pole number of the permanent magnets (313) disposed on the fifth side of the first rotor (3).

4. The energy-saving brushless motor-kinetic generator (100) of claim 1, wherein pole number of the permanent magnets (313) disposed on the fifth side of the first rotor (3) is the same as pole number of the permanent magnets (313) disposed on a side near to the circular disc body (211) of the first stator ferrite core (11) of the second rotor (12-1).

5. The energy-saving brushless motor-kinetic generator (100) of claim 1, wherein the primary turn number of the high counter-electromotive force winding set (4) disposed on the circular disc body (211) of the primary stator ferrite core (2) is lower than the first turn number of the high counter-electromotive force winding set (14) disposed on the circular disc body (211) of the first stator ferrite core (11).

6. The energy-saving brushless motor-kinetic generator (100) of claim 1, wherein pole number of the permanent magnets (313) disposed on one side of the circular disc body (311) of the fourth rotor (12-2) of the second electric generator set (130) is different from pole number of the permanent magnets (313) disposed on the other side of the circular disc body (311) of the fourth rotor (12-2) of the second electric generator set (130).

7. The energy-saving brushless motor-kinetic generator (100) of claim 6, wherein the fourth rotor (12-2) of the second electric generator set (130) has two sides opposite with each other, and pole number of the permanent magnets (313) disposed on one side near the circular disc body (311) of the primary stator ferrite core (2) is lower than pole number of the permanent magnets (313) disposed on the other side.

8. The energy-saving brushless motor-kinetic generator (100) of claim 1, wherein the primary turn number of the high counter-electromotive force winding set (4) disposed on the circular disc body (211) of the primary stator ferrite core (2) is lower than the second turn number of the high counter-electromotive force winding set (7) disposed on the circular disc body of the second stator ferrite core (6).

9. The energy-saving brushless motor-kinetic generator (100) of claim 1, wherein pole number of the permanent magnets (313) disposed on the ninth side of the third rotor (8) of the second electric generator set (130) is the same as pole number of the permanent magnets (313) disposed on one side of the fourth rotor (12-2) near the circular disc body (211) of the second stator ferrite core (6).

10. The energy-saving brushless motor-kinetic generator (100) of claim 1, wherein the primary turn number of the high counter-electromotive force winding set (4) of the primary stator ferrite core (2) is lower than the second turn number of the high counter-electromotive force winding set (7) of the second stator ferrite core (6).

11. The energy-saving brushless motor-kinetic generator (100) of claim 1, wherein the primary stator ferrite core (2) is an input end of the energy-saving brushless motor-kinetic generator (100).

12. The energy-saving brushless motor-kinetic generator (100) of claim 1, wherein the first stator ferrite core (11) and the second stator ferrite core (6) are both output ends of the energy-saving brushless motor-kinetic generator (100).

13. The energy-saving brushless motor-kinetic generator (100) of claim 1, wherein polarities of each of the permanent magnets (313) of the first rotor (3), the second rotor (12-1), the third rotor (8) and the fourth rotor (12-2) are disposed pair by pair of south pole and north pole.

14. The energy-saving brushless motor-kinetic generator (100) of claim 1, wherein a bearing (150, 160) is disposed at center region of the first side cover (15) or the second side cover (16).
